# EUROPEAN PATENT APPLICATION

(11) **EP 1 736 874 A2**
(43) Date of publication of application: **27.12.2006**
(21) Application number: 06115130.4
(22) Date of filing: 08.06.2006
(51) Int. Cl.: G06F 9/445, G06F 17/30

(54) **Apparatus and method for file management**

(30) Priority: 08.06.2005 KR 2005048838
(71) Applicant: Samsung Electronics Co., Ltd., Suwon-si 442-742 Gyeonggi-Do (KR)
(72) Inventor: JANG, Myung-yul, Seoul (KR)
(74) Representative: Walaski, Jan Filip

(57) **Abstract**

A file management method and apparatus to prevent accidental damage to driver files necessary to drive a device, such as a printer or a scanner, which is connected to a terminal, such as a PC. The file management method includes receiving a request to perform an operation on the file, searching information regarding a plurality of files necessary to drive a device connected to the terminal in a storage unit, and determining whether the file is a file necessary to drive the device based on the information. If the file is determined to be a file necessary to drive the device, the operation is not performed on the file. The information regarding a set of driver files is stored in a memory. Then, if a request to delete a predetermined file stored in the memory is issued, it is determined whether the predetermined file is a driver file by examining the driver files stored in the memory. Thereafter, the predetermined file is deleted only if it is not a driver file. Therefore, it is possible to prevent a failure to drive a device because of a damaged device driver and minimize user inconvenience related to reinstallation of a device driver by preventing accidental damage to the driver files by a user or a malfunctioning terminal.

## Description

The present invention relates to a file management method and apparatus to manage files stored in a terminal, such as a PC, and, more particularly, to a file management method and apparatus to manage driver files necessary to drive a device, such as a printer or a scanner, which is connected to a terminal.

In order to drive a device, such as a printer or a scanner, which is connected to a personal computer (PC), files necessary for driving the device must be installed in the PC. These files may be installed in the PC as driver files. The driver files for driving a predetermined device may be stored on a disc or a CD-ROM that is provided together with the predetermined device, and then may be installed in the PC when the predetermined device is connected to the PC. Alternatively, if the PC has a plug-and-play function, the driver files for driving a device may be recognized by the PC and may be automatically installed in the PC when the device is connected to the PC.

Conventionally, if no driver files for driving a predetermined device are installed in a PC, or if the driver files for driving the predetermined device are installed in the PC but are damaged, the PC cannot control and drive the predetermined device. In other words, if a user damages driver files for driving a device connected to a PC by accidentally deleting the driver files, moving the driver files from one directory to another directory, or changing names of the driver files, the device cannot be controlled or driven by the PC. Thus, in order to drive the device, the driver files must be reinstalled in the PC.

The present invention provides a file management method and apparatus to manage driver files necessary for driving a device, such as a printer or a scanner, which is connected to a terminal, in which is prevented an accidental damage of the driver files, such as deleting, moving or renaming the driver files by a user.

Additional aspects and advantages of the present invention will be set forth in part in the description which follows and, in part, will be obvious from the description, or may be learned by practice of the invention.
The foregoing and/or other aspects of the present invention are achieved by providing a file management method of managing a file stored in a terminal. The file management method includes receiving a request to perform an operation on the file, searching information regarding one or more files necessary to drive a device connected to the terminal in a storage unit, and determining whether the file is one of the one or more files necessary to drive the device based on the searched information. If the file is determined to be a file necessary to drive the device, the operation is not performed on the file.

The file management method may also include outputting a warning message to indicate that the operation cannot be performed on the file if the file is one of the one or more files necessary to drive the device.

The outputting of the warning message may include outputting the warning message using at least one of a voice message, a buzzer, and a text message.
The device may be one of a printer, a scanner, and a multifunctional device.
The operation may be one of deleting the file, moving the file, changing the name of the file, and copying the file.

The file management method may also include storing the information regarding the one or more files in the storage unit if the one or more files necessary to drive the device are stored in the terminal.

The information regarding the one or more files necessary to drive the device may include at least one of names of the one or more files necessary to drive the device, location information specifying where in the storage unit are stored the one or more files necessary to drive the device, and information regarding the device.

The information regarding the one or more files necessary to drive the device may be obtained from an information file '.inf stored in the terminal together with the one or more files necessary to drive the device.

The file management method may also include deleting the information regarding the file from the storage unit if the file is one of the one or more files necessary to drive the device and is deleted from the terminal.

The deleting may include deleting the information regarding the file from the storage unit and the information regarding a device driver corresponding to the device, which is stored in the storage unit.

The foregoing and/or other aspects of the present invention are also achieved by providing a file management method of managing a file stored in a terminal. The file management method includes receiving a request to perform an operation on the file from a module, determining whether the module is an authorized module to request performing the operation on the file, performing the operation on the file if the module is determined to be the authorized module to request performing the operation on the file, and searching a storage unit for information regarding a plurality of files necessary to drive a device connected to the terminal and determining whether the file is a file necessary to drive the device based on the information if the module is determined not to be the authorized module to request performing the operation on the file.

The authorized module to request the performing of the operation on the file may be one of a driver installer, a driver uninstaller, and a device state display window application.

If a request to perform the operation on the file is issued by a user, the device state display window application may call a driver uninstaller for the device or may be authorized to perform the operation on the file.

The foregoing and/or other aspects of the present invention are also achieved by providing a computer-readable recording medium storing executable codes of a file management method, the method including receiving a request to perform an operation on a file, searching information regarding one or more files necessary to drive a device connected to the terminal in a storage unit, and determining whether the file is one of the one or more files necessary to drive the device based on the information, wherein if the file is determined to be one of the one or more files necessary to drive the device, the operation is not performed on the file.

The computer readable codes may be registered with an operating system of the terminal or may be registered with a registry of the terminal as a dynamic link library (DLL).

The foregoing and/or other aspects of the present invention are also achieved by providing a computer-readable recording medium storing executable codes of a file management method, the method including receiving a request to perform an operation on a file from a module, determining whether the module is an authorized module to request performing the operation on the file, performing the operation on the file if the module is determined to be an authorized module to request performing the operation on the file, and searching information regarding a plurality of files necessary to drive a device connected to the terminal in a storage unit and determining whether the file is a file necessary to drive the device based on the searched information if the module is determined not to be the authorized module to request performing the operation on the file. The computer readable codes may be registered with an operating system of the terminal or may be registered with a registry of the terminal as a DLL.

The foregoing and/or other aspects of the present invention are also achieved by providing a file management apparatus to manage a file stored in a terminal. The file management apparatus includes a request reception unit to receive a request to perform a predetermined operation on the file, a storage unit to store information regarding a plurality of files necessary to drive a device connected to the terminal, and a file identification unit to determine whether the file is necessary to drive the device based on the information stored in the storage unit.
The predetermined operation may be one of deleting the file, moving the file, changing the name of the file, and copying the file.

The file management apparatus may also include a warning unit to output a warning message indicating that the predetermined operation cannot be performed on the file if the file is determined to be necessary for driving the device.

The file management apparatus may further include a storage control unit to store the information regarding the file in the storage unit if the files necessary for driving the device are stored in the terminal and to delete the information regarding the file if the file necessary for driving the device is deleted from the terminal.

The foregoing and/or other aspects of the present invention are also achieved by providing a file management apparatus usable in a computer capable of preventing accidental damage to designated files, the apparatus including an execution unit to receive and execute a command to alter a file, a filter unit to receive and transmit the command to the execution unit when it is determined that the file to be altered is not one of the designated files, and a command interface to receive the command to alter a file, to transmit the command selectively to the execution unit if the command includes a mark of authority and to the filter unit if the command does not include the mark of authority.

The foregoing and/or other aspects of the present invention are also achieved by providing a method of preventing damage to selected files stored in a terminal, the method including receiving a command to alter a file, executing the command if it is determined that the command has been issued from a module having authority to alter the selected files or if the file is determined not to be one of the selected files, and displaying a warning message if the file is one of the selected file and the command was issued from a module not having the authority to alter the selected files without executing the command.

The foregoing and/or other aspects of the present invention are also achieved by providing a method of preventing damage to predetermined files stored in a terminal, the method including determining whether a received command to alter a file among the predetermined files was issued from a module not having authority to alter a file among the predetermined files, and preventing alteration of the file if it is determined that the command to alter the file was issued from a module not having the authority to alter the file, otherwise allowing access to alter the file among the predetermined files.

These and/or other aspects and advantages of the present invention will become apparent and more readily appreciated from the following description of the embodiments, taken in conjunction with the accompanying drawings of which:
FIG. 1 is a flowchart illustrating a file management method of managing driver files necessary to drive a device connected to a terminal according to an exemplary embodiment of the present invention;
FIG. 2 is a diagram illustrating an example of issuing a request to delete a file stored in a terminal;
FIG. 3 is a diagram illustrating an example of displaying of a warning message to indicate that a file requested to be deleted by a user is a driver file that cannot be deleted;
FIG. 4 is a diagram illustrating an uninstaller module to uninstall a device driver installed in a terminal according to an exemplary embodiment of the present invention;
FIG. 5 is a diagram illustrating an example of deleting a driver file using a printer state display window; and
FIG. 6 is a block diagram of a file management apparatus to manage driver files necessary to drive a device connected to a terminal according to an exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

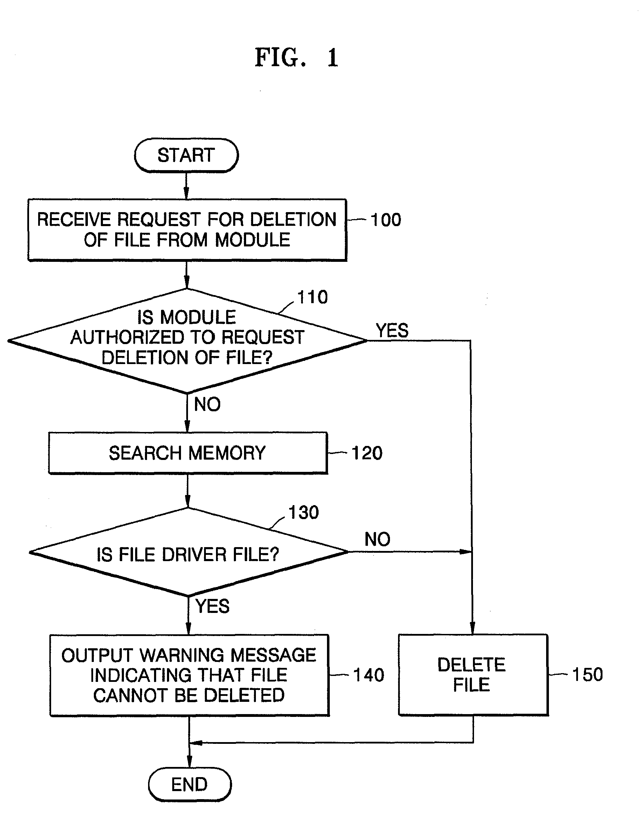

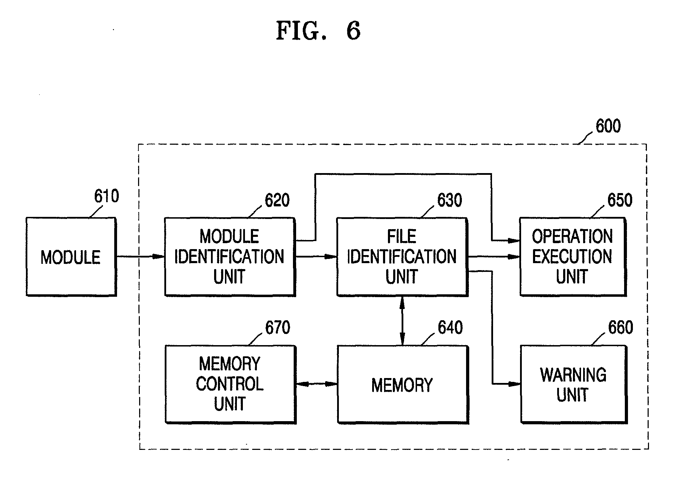

FIG. 1 is a flowchart illustrating a file management method of managing driver files necessary for driving a device connected to a terminal according to an exemplary embodiment of the present invention. FIG. 6 is a block diagram of a file management apparatus to manage driver files necessary for driving a device connected to a terminal according to an exemplary embodiment of the present invention. The method of FIG. 1 can be performed by the file management apparatus 600 illustrated in FIG. 6. However, it should be understood that the present invention is not intended to be limited to executing the method of FIG. 1 on the file managing apparatus 600 of FIG. 6, and the method may be performed on other hardware and/or software combination systems. The file management method will now be described in detail with reference to FIGS. 1 and 6.

Referring to FIGS. 1 and 6, a memory 640 of the file management apparatus 600 stores information regarding one or more driver files necessary to drive a device connected to a PC. The information stored in the memory 640 may include information regarding the device, a name of a device driver to drive the device, names of the driver files necessary to drive the device, and location information specifying where in the PC are stored the driver files (e.g., a path of a directory in which the driver files are stored). The memory 640 may be a ROM, a RAM, or a hard disc drive (HDD) installed in the PC.

A memory control unit 670 updates the information stored in the memory 640 according to modifications related to the driver files.

If a new device driver is installed in the PC, the memory control unit 670 parses a file with a file extension 'inf', which is stored in a directory of the PC and contains information regarding the new device driver, thereby obtaining information regarding one or more driver files of the new device driver. Thereafter, the memory control unit 670 stores the obtained information in the memory 640. The obtained information may include information regarding a device corresponding to the new device driver, the name of the new device driver, names of the one or more driver files of the new device driver, and location information specifying where are stored the one or more driver files of the new device driver. When a user manually stores the one or more driver files of the new device driver in the PC, the user may register the obtained information in the memory 640 using the memory control unit 670.

If a device driver installed in the PC is uninstalled, the memory control unit 670 deletes the information regarding the uninstalled driver from the memory 640 using the name of the device driver or the name of a device that uses the device driver. If the user manually deletes all of the driver files from the memory 670, the user may delete the file information regarding the deleted driver files from the memory 640 using the memory control unit 670.

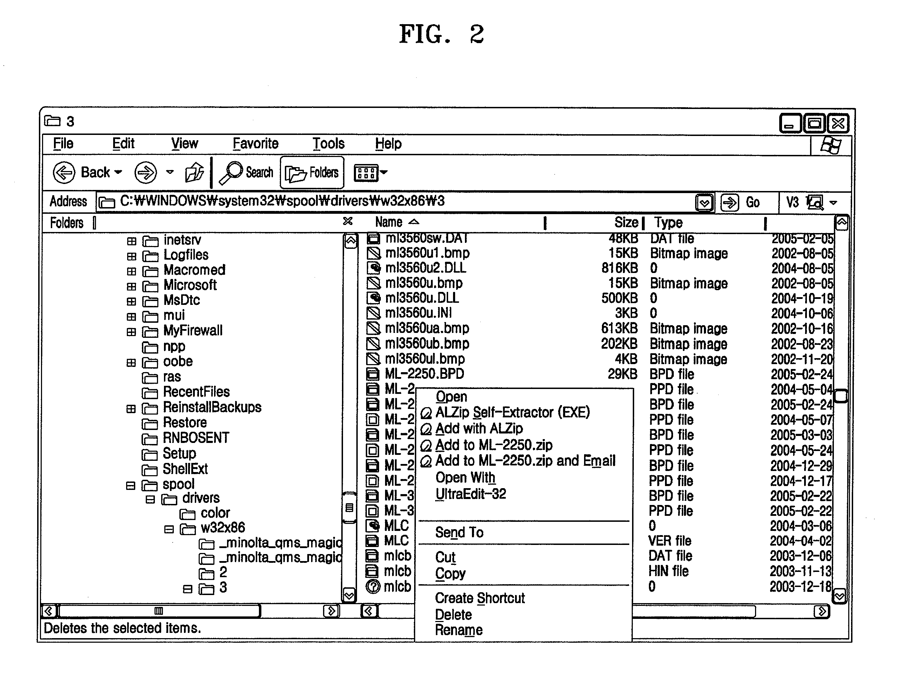

In operation 100, if the user issues a request to delete a file stored in a PC from a module 610, a module identification unit 620 receives a delete request signal from the module 610 to request the deletion of the file. The module 610 may be a Windows explorer, a 'my computer' window, a printer state display window, a driver installer, or a driver uninstaller. FIG. 2 is a diagram illustrating an example of issuing a request to delete a file ML-2250.PPD stored in a PC using the Windows explorer.

In operation 110, the module identification unit 620 determines whether the module 610 is a module authorized to request the deletion of the file (i.e., the module 610 is an authorized module). If the module 610 is an authorized module, the module 610 may output the delete request signal with a flag set to a predetermined value, for example, 1 (i.e., a mark of authority). The module identification unit 620 may determine whether the module 610 is an authorized module by examining the flag set in the delete request signal received from the module 610.

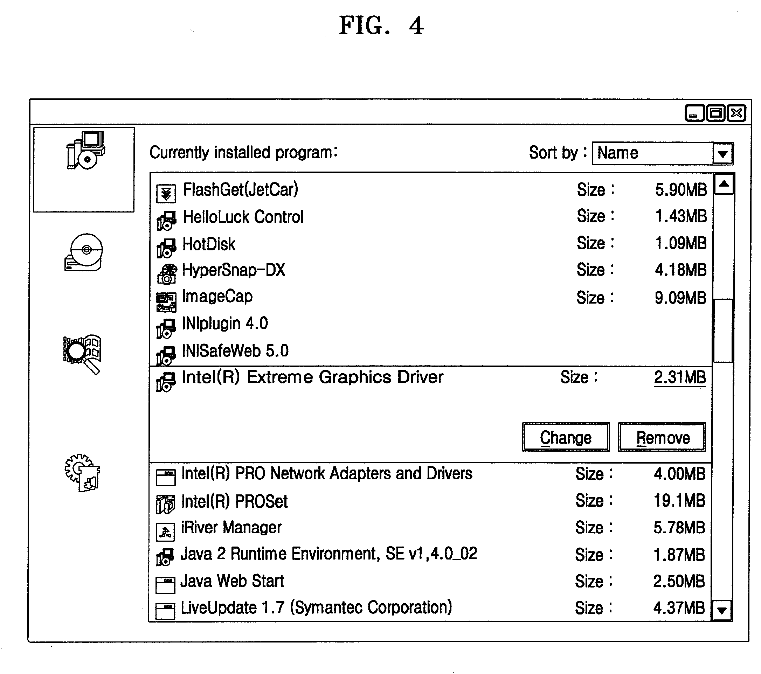

If the module identification unit 620 has determined in the operation 110 that the module 610 is an authorized module, an operation execution unit 650 deletes the file from the PC in operation 150. Specifically, if the module 610 is an installer module to install a device driver in the PC or an uninstaller module to uninstall a device driver installed in the PC, the module identification unit 620 may determine the module 610 as being authorized to request the deletion of a file stored in the PC, in which case, the module 610 may output a delete request signal with the flag set to 1. FIG. 4 is a diagram illustrating an example of deleting a device driver when the module 610 is an uninstaller module.

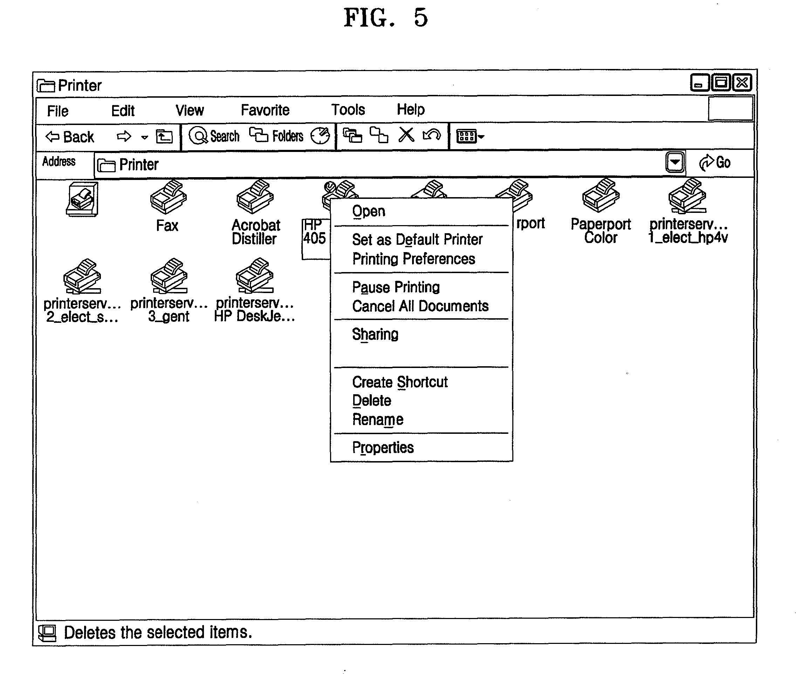

Driver files related to a device may also be deleted from the PC by selecting an icon of the device displayed in a printer/fax state display window, as illustrated in FIG. 5. If a request to delete a driver file is issued using the printer/fax state display window, an uninstaller module may be called and then given authorization to request the deletion of the driver file. If no uninstaller module exists, the printer/fax state display window may be authorized to request the deletion of the driver file by setting a flag to 1, and may output a delete request signal to request the deletion of the driver file with the flag set to 1.

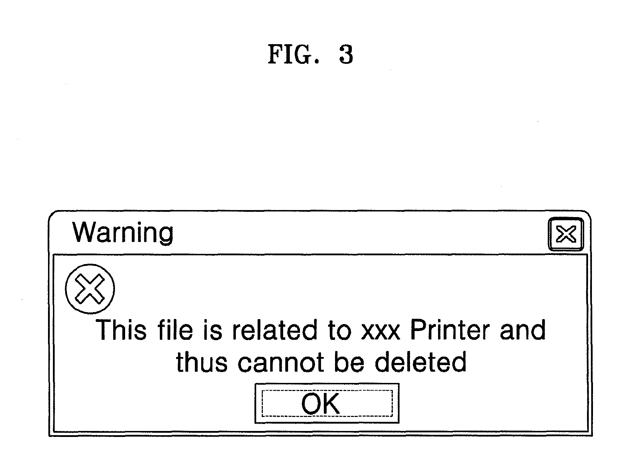

If the module identification unit 620 has determined in the operation 110 that the module 610 is not authorized to request the deletion of the file, in operation 120, a file identification unit 630 searches the memory 640 for information regarding driver files. In operation 130, the file identification unit 630 determines whether the file is necessary to drive a device connected to the PC based on the information. If in the operation 130 the file identification unit 630 has determined the file to be a driver file necessary to drive a device, then in the operation 140 a warning unit 660 outputs a warning message to indicate that the file is a driver file that cannot be deleted. FIG. 3 is a diagram illustrating an example of the warning message output in the operation 140.

If in operation 130 the file identification unit 650 has determined the file to be a file other than a driver file, then in the operation 150 the operation execution unit 650 deletes the file from the PC.

The file management method according to embodiments of the present invention may be embodied as a computer program, and the computer program may be registered with an operating system of a terminal as a dynamic link library.

Alternatively, the computer program may be stored in a folder and then may be registered with a registry of the terminal.

The file management method according to an exemplary embodiment of the present invention has been described as being applied to a case in which a request to delete a predetermined file is issued. However, the file management method can be applied to file operations other than a file deletion operation. For example, the file management can be applied to various operations, such as moving a file, changing the name of a file, and copying a file.

The embodiments of the present invention can be realized as computer-readable codes stored on a computer-readable recording medium. The computer-readable recording medium may be any type of recording device in which data is stored in a computer-readable manner. Examples of the computer-readable recording medium include a read-only memory (ROM), a random-access memory (RAM), a CD-ROM, a magnetic tape, a floppy disc, an optical data storage, and a carrier wave (e.g., data transmission through the Internet). The computer readable recording medium can also be distributed over network coupled computer systems so that the computer readable codes are stored and executed in a distributed fashion. The embodiments of the present invention may also be embodied in hardware or a combination of hardware and software.

As described above, according to embodiments of the present invention, information regarding driver files is stored in a memory. If a request to delete a predetermined file stored in the memory is issued, it is determined whether the predetermined file is a driver file by examining the driver files stored in the memory. Thereafter, the predetermined file is deleted only if it is not a driver file. Therefore, accidentally damaging driver files by a user or a malfunctioning terminal is prevented, a failure to drive a device because of a damaged device driver is avoided, and a user inconvenience related to reinstalling a device driver by preventing a set of driver files from being is minimized.

As described above, according to embodiments of the present invention, also provided is a computer-readable recording medium that stores executable codes of a file management method is provided, where the method can include receiving a request to perform an operation on a file from a module, determining whether the module is an authorized module to request performing the operation on the file, performing the operation on the file if the module is determined to be an authorized module to request performing the operation on the file, and searching information regarding a plurality of files necessary to drive a device connected to the terminal in a storage unit and to determine whether the file is a file necessary to drive the device based on the searched information, if the module is determined not to be an authorized module to request performing the operation on the file. The computer readable codes can be registered with an operating system of the terminal or can be registered with a registry of the terminal as a dynamic link library.

As described above, according to embodiments of the present invention, also provided is a file management apparatus usable in a computer and capable of preventing damage to designated files, the apparatus can include an execution unit to receive and execute a command to alter a file, a filter unit to receive the command to alter a file, to determine whether the file to be altered is one of the designated files, and to transmit the command to the command execution unit when the file is determined not to be one of the designated files, and a command interface to receive the command to alter a file, to transmit the command selectively to the execution unit if the command includes a mark of authority and to the filter unit if the command does not include the mark of authority. The filter unit may include a memory to store information on the designated files and a file identification unit to determine whether the file is one of the designated files based on the information retrieved from the memory. The filter unit may further include a warning unit to display a warning message when the command to alter the file is not executed. The information on the designated files may include names of the designated files and a location where the designated files are stored. Further, the memory can store the information on the designated files in a predetermined file. The file management apparatus may also include a memory control unit to update the predetermined file with the information on the designated files when the command is executed by the execution unit. Furthermore, the command to alter the file can include one of deleting the file, renaming the file, and changing the storage location of the file, the designated files can include one or more files necessary to drive at least one device connected to the computer, and the mark of authority can be a flag set within the command.

Although a few embodiments of the present invention have been shown and described, it will be appreciated by those skilled in the art that changes may be made in these embodiments without departing from the scope of the invention as defined in the appended claims.

## Claims

1. A file management method for managing a file stored in a terminal, the method comprising:
receiving a request to perform an operation on a file;
determining whether the file is necessary to drive a device connected to the terminal; and
determining whether the operation can be performed on the file depending on whether the file is determined to be a necessary file.

2. A method according to claim 1, further comprising preventing the operation from being performed on the file if the file is determined to be a necessary file.

3. A method according to claim 1 or 2, wherein the step of determining whether the file is necessary to drive the device comprises searching information stored in a storage unit relating to one or more files necessary to drive a device.

4. A method according to any one of the preceding claims, further comprising:
outputting a warning message to indicate that the operation cannot be performed on the file if the file is one of the one or more files necessary to drive the device.

5. A method according to claim 4, comprising outputting the warning message using at least one of a voice message, a buzzer, and a text message.

6. A method according to any one of the preceding claims, wherein the device comprises one of a printer, a scanner, and a multifunctional device.

7. A method according to any one of the preceding claims, wherein the operation comprises one of deleting the file, moving the file, changing the name of the file, and copying the file.

8. A method according to any one of the preceding claims, wherein the information regarding the one or more files necessary to drive the device comprises at least one of names of the one or more files necessary to drive the device, location information specifying where in a storage unit the one or more files necessary to drive the device are stored, and information regarding the device.

9. A method according to any one of the preceding claims, further comprising:
storing the information regarding the one or more files in a storage unit if the one or more files necessary to drive the device are stored in the terminal.

10. A method according to claim 8 or 9, wherein the information regarding the one or more files necessary to drive the device is obtained from an information file stored in the terminal.

11. A method according to any one of the preceding claims, further comprising:
deleting the information regarding the file if the file is one of the one or more files necessary to drive the device and is deleted from the terminal.

12. A method according to claim 10, wherein the deleting of the information comprises deleting the information regarding the file from the storage unit and the information regarding a device driver corresponding to the device, which is stored in the storage unit.

13. The file management method of any one of the preceding claims, wherein the storage unit comprises one of a ROM, a RAM, and a hard disk drive.

14. A file management method for managing a file stored in a terminal, comprising:
receiving a request to perform an operation on the file from a module;
determining whether the module is authorized to request performance of the operation on the file;
performing the operation on the file if the module is determined to be an authorized module; and
if the module is determined not to be an authorized module, determining whether the file is a file necessary for driving a device connected to the terminal.

15. A method according to claim 14, wherein the step of determining whether the file is a necessary file comprises searching a storage unit for information regarding a plurality of files necessary to drive a device connected to the terminal.

16. A method according to claim 13, wherein an authorized module is one of a driver installer, a driver uninstaller, and a device state display window application.

17. A method according to claim 16, wherein the authorized module comprises a device state display window application, and if the request to perform the operation on the file is issued by a user, the device state display window application calls a driver uninstaller for the device or is authorized to perform the operation on the file.

18. A method according to any one of claims 14 to 17, further comprising preventing the operation from being performed on the file if the file is determined to be a necessary file.

19. A computer program for execution by a processor to perform a method according to any one of the preceding claims.

20. A computer program according to claim 19, wherein the program includes computer readable codes registered with an operating system of the terminal or registered with a registry of the terminal as a dynamic link library.

21. A file management apparatus for managing a file stored in a terminal comprising:
a request reception unit for receiving a request to perform a predetermined operation on a file;
a storage unit for storing information regarding a plurality of files necessary to drive a device connected to the terminal; and
a file identification unit for determining whether the file on which the operation is requested to be performed is necessary to drive the device by searching the storage unit.

22. A file management apparatus according to claim 21, wherein the predetermined operation comprises one of deleting the file, moving the file, changing the name of the file, and copying the file.

23. A file management apparatus according to claim 21 or 22, further comprising:
a warning unit to output a warning message indicating that the predetermined operation cannot be performed on the file if the file is determined to be necessary for driving the device.

24. A file management apparatus according to any one of claims 21 to 23, further comprising:
a storage control unit to store the information regarding the file in the storage unit if the files necessary for driving the device are stored in the terminal and to delete the information regarding the file if the file necessary for driving the device is deleted from the terminal.

25. A method of preventing damage to selected files stored in a terminal, the method comprising:
receiving a command to alter a file;
executing the received command if it is determined that the command has been issued from a module having authority to alter the selected files or if the file is determined not to be one of the selected files; and
displaying a warning message if the file is one of the selected files and the command was issued from a module not having the authority to alter the selected files without executing the command.

26. A method of preventing damage to predetermined files stored in a terminal, the method comprising:
determining whether a received command to alter a file among the predetermined files was issued from a module not having authority to alter a file among the predetermined files; and
preventing alteration of the file if it is determined that the command to alter the file was issued from a module not having the authority to alter the file, otherwise allowing access to alter the file among the predetermined files.
